# EUROPEAN PATENT APPLICATION

(11) **EP 2 607 399 A1**
(43) Date of publication of application: **26.06.2013**
(21) Application number: 11817593.4
(22) Date of filing: 17.08.2011
(51) Int. Cl.: C08G 63/08, C08F 2/00, B01D 1/22, B01D 9/00

(54) **PROCESS FOR PRODUCING POLYLACTIC ACID AND REACTORS FOR USE IN SAID PROCESS**

(30) Priority: 20.08.2010 BR 10077889
(71) Applicant: Companhia Refinadora da Amazônia, 66825-000 Belém - PA (BR)
(72) Inventor: YOSHIDA, Paulo, 22630-010 Rio De Janeiro - RJ (BR)
(74) Representative: Ström & Gulliksson AB
(86) International application number: PCT/BR2011/000289
(87) International publication number: WO 2012/021957

(57) **Abstract**

A process is described for producing a high molar mass polylactic acid, which comprises the following steps: a) polycondensation in a reactor (R1) of a lactic acid solution, by heating in the form of temperature gradients and under controlled pressure, resulting in a polylactic acid oligomer within the range of 300 to 5000 g/mol; b) conversion, in reactor (200), of the polylactic acid of low molar mass obtained in step a) to a lactide, in the presence of a depolymerization catalyst; c) separation of the volatile fractions; d) recrystallization of the lactide in the vessel (R3), in order to obtain ethanol; e) polymerization, in a tube reactor (300), of the recrystallized lactide obtained in step d), via ring opening in the presence of the catalyst, producing a high molar mass polylactic acid; f) devolatilization, at (400), of the polymeric mass obtained in step e); and g) recovery of the final polylactic acid product with a high degree of purity, with a molar mass of between 50 000 and 200 000 g/mol and a reaction conversion of between 70% and 95%. Also described are the depolymerization reactor (200), polymerization reactor (300) and devolatilization reactor (400) used in the process of the invention.

## Description

### FIELD OF THE INVENTION

The present invention belongs to the field of processes for producing organic acids, more specifically, processes for producing lactic acid from raw materials of renewable sources with low levels of non-biodegradable substances. Furthermore, the invention is directed to a depolymerization reactor and to a polymerization reactor for use in said process.

### BACKGROUND OF THE INVENTION

In recent years the use of plastics has been growing, especially for the production and use of consumer goods. Thus, several alternatives to reduce the environmental impact generated by the misuse of plastic products have appeared in various research centers and companies worldwide, in order to reduce waste and overuse of plastic materials produced from oil derivatives. Among the amount of plastic used in Brazil, over 95% are from non-renewable sources and only 15% thereof go through any recycling program (see: www.ambientebrasil.com.br on 12/28/2009).

In this context, the development of plastics from renewable sources have been increasingly intense in the search for plastic materials that degrade when exposed to typical environmental disposal conditions without causing harmful impact to the environment.

In the prior art, poly (lactic acid) or simply PLA emerges as a promising alternative to a thermoplastic polymer with good mechanical performance, good processability, good transparency, besides relevant biological characteristics, such as biodegradability and biocompatibility (B. Gupta et al., Prog. Polym. Sci. 32 (2007) 455-482).

The use of polymers derived from lactic acid is well known in the medical industry, where the PLA is already used in the production of implants, devices for drug controlled release, sutures and tissue engineering, due to their high biocompatibility, as described in U.S. patent document no. 5,053,485.

Several names are attributed to poly (lactic acid), such as polylactide, polylactic acid, poly-lactic acid. In the present specification, the official substance name, poly (lactic acid), is used.

The synthesis process of lactic acid polycondensate into lactide and the subsequent polymerization thereof to form the poly (lactic acid) was first reported by Carothers, W.A. et al., "Studies of Polymerization and Ring Formation. X. The reversible polymerization of six-membered cyclic esters" JACS 54, 761 (1932). The polymer based on lactide units was obtained by heating lactic acid under reduced pressure, however with low molar mass values and high instability to moisture (B. Gupta et al., Prog. Polym. Sci. 32 (2007) 455-482).

The U.S. patent document no. 2,668,162 relates to the production of high molar mass poly (lactic acid) based on the glucose heating in the presence of a catalyst based on titanium oxides and halides.

Currently, poly (lactic acid) can be obtained by two manners: by direct condensation of lactic acid or by the formation of an intermediate, also known as cyclic dimer, followed by the ring-opening polymerization reaction.

In direct condensation, as performed by Carothers, a solvent is used under high temperatures and low pressures so that all the water formed by condensation is eliminated. In general, the resulting polymer has low to medium molar mass values, and sometimes chain extenders should be used, since when the chain reaches a certain size, the depolymerization kinetics reaches the same polymerization reaction rate and the system is under dynamic equilibrium (see U.S. patent document no. 1,995,970).

On the other hand, indirect polymerization via an intermediate or lactide is solvent free, and the control of the conditions for ring-opening polymerization process as well as the addition of specific catalysts, can lead to high molar mass polymers and also polymers with controlled D and L isomer rates.

The significant environmental focus that has been given to PLA and derivatives thereof due to the potential use of the polymer in consumer goods as a potential substitute for oil-derived plastics led to the development of new approaches for the PLA production with a significant reduction in the use of oil derivatives in the process thereof. International standards currently limit the content of non-degradable substances in biodegradable plastics, for example, in 10% (EN 13432 and EN 14995 Standards - "Proof of compostability of plastic products"). Thus, the concept of PLA biodegradability should be taken into consideration from the production thereof, where industrial waste which is harmful to the environment and from non-renewable resources should be minimized or even eliminated from the process, thereby ensuring an environmentally friendly product from the production thereof.

It is well known in the art that the term lactide refers to the cyclic dimer of lactic acid, 2-hydroxypropionic acid, as shown below:

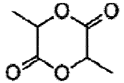

The lactide has high chemical stability due to its six-membered ring structure, and therefore the polymerization process should be given in a different way, usually with the use of catalysts (see U.S. patent document no. 5, 136, 017) .

Several studies and patent applications relating to the preparation of high optical and chemical purity lactides have been produced. The Brazilian patent document PI 8704814 claims the process for producing lactide in a technical scale, particularly L(-) or D(+) optically pure and with high chemical yield lactide. Obtaining such products occurs by the addition of 0.5% to 1.0% of tin based catalyst, especially tin halides and tin organic compounds, including tin α-naphtenate or tin β-naphtenate. These compounds, in turn, do not guarantee the currently required purity in terms of residues which are potentially contaminant to the environment.

The U.S. patent document no. 4,988,982 claims the synthesis process of the lactide in high amounts and optically pure through the use of 2-halopropionic acid salts to replace lactic acid. In such U.S. document, acid salts such as lithium 2-bromopropionate, strontium 2-bromopropionate, barium 2-bromopropionate, alkali or alkaline earth metals 2-iodopropionate, may be used. According to this document, as the 2-halopropionic acid salts can be readily purified by recrystallization, the purity of the resulting lactide can be improved. However, the claimed process does not guarantee compliance with the stream minimum levels of non-biodegradable waste. Furthermore, the invention uses several organic solvents during the process, such as alcohols, ethers, ketones and esters for the production of lactide, and does not consider the residues from the reaction of 2-halopropionic acids, such as sodium, potassium, barium, strontium halides, among others which are potentially polluting and harmful to the environment.

Other publications relate to the process of obtaining poly (lactic acid) and/or derivatives thereof as an overall process from the lactic acid monomer or derivative.

For example, U.S. document no. 20060128938A1 claims a process for producing a polymer derived from lactic acid with an average molar mass between 15,000 g/mol and 50,000 g/mol with carbonyl end groups, for their use in appropriate devices for drug controlled release. According to this document, the ring-opening polymerization process preferentially occurs in a solution containing lactic acid from which the polymerization product is subsequently removed. The most suitable solvents for use in dissolving the lactide are mostly aromatic hydrocarbons such as benzene, toluene, xylene, and other organic compounds such as decalin and dimethylformamide. According to the applicants, after polymerization, a polymer of molar mass between 15,000 and 50,000 can also be obtained via hydrolysis. In such subsequent step, the previously obtained polymer may be dissolved in halogenated hydrocarbons such as chloroform, dichloromethane, among others. The hydrolysis step extends until the polymer reaches the desired molar mass values. Then the polymer is precipitated in a non-solvent, such as methanol, ethanol, isopropyl ether or even n-hexane. It is evident that, although the obtained polymer has the required characteristics to be considered biodegradable and biocompatible, the production process thereof depends on aromatic compounds widely known as harmful to human health and to the environment, and also does not guarantee that the final product is completely free of these compounds.

The U.S. patent document no. 5,770,682 claims a method for producing poly (lactic acid) via ring-opening polymerization, wherein a compound which is able of inhibiting the catalytic activity is added at the end of the reaction, and unreacted lactide is removed from reaction medium by pressure reduction and concurrent passage of an inert gas. In this document, the inhibitory agent added comprises phosphoric acid and phosphorous acid, as well as aluminum derivatives. The addition of these compounds can cause contamination in the final product which is extensive to users thereof, as well as in the place where the product will be discarded.

The Brazilian patent document PI 0520573-5 claims a process for preparing high molar mass polylactic acid with a bimodal or multimodal distribution based on the polycondensation of lactic acid in the presence of aromatic diol with a single benzene ring. According to the inventors, the lactic acid polymerization process via ring opening is very laborious, although it leads to products of higher molar masses. It is well described in the art that the lactic acid polycondensation process in the presence of a diol or diacid co-monomers often results in an extension of the polymer chains. This is because in this type of polymerization prepolymers with two carboxyl end groups are formed in place of a carboxyl group and a hydroxyl. Thus, the obtained prepolymers can subsequently be cross-linked, leading to a higher molar mass polyhydroxycarboxylic acid. According to this document, when lactic acid is polymerized in the presence of a catalyst system/aromatic diol where the aromatic diol has a single benzene ring, it leads to a polymer of bimodal or multimodal molar mass distribution, since the polymeric chains bind to the aromatic diol chains. Consequently, the polyhydroxycarboxylic acid has primarily carboxylic acid and hydroxyl end groups. Thus, in contrast to aliphatic diols, aromatic diols aid in the catalyst action, which results in a bimodal molar weight polymer.

The Brazilian patent document PI 9305788-1 claims a continuous process for the manufacture of lactide polymers with improved purification methods. The invention is based in obtaining polylactic acid from lactic acid solutions in water, methanol, ethanol, propanol, butanol, isopropanol, isobutanol and the like, using already known polymerization methods, subsequent depolymerization and lactide purification in a distillation system and further polymerization of the purified lactide, leading to high purity and high molar mass values products.

Due to the increasing demand for biodegradable plastic materials mainly from renewable resources, the poly (lactic acid) is established as an increasing alternative in the worldwide industry. Thus, the demand for technical developments that lead to cheaper and more efficient production means is also increased, especially based on techniques that do not cause environmental impact.

The present invention relates to a production alternative wherein the process conditions and the proposed methodologies, besides the equipment for the realization thereof, lead to the production of high purity and high molar mass values poly (lactic acid).

### SUMMARY OF THE INVENTION

In a broad way, the production of high molar mass poly (lactic acid) according to the present invention comprises the steps of:
a) polycondensation of a lactic acid solution by heating in the form of temperature ramps and under controlled pressure, obtaining low molar mass poly (lactic acid) (oligomer) in the range of 300 to 5000 g/mol;
b) conversion, of the low molar mass poly (lactic acid) obtained in a) into a lactide, in the presence of a depolymerization catalyst;
c) separation of the volatile fractions generated in the conversion by a sequence of isothermal flashes, thus obtaining lactide free of volatile fractions;
d) recrystallization of the lactide from step b) in ethanol;
e) polymerization of the recrystallized lactide obtained in d) via ring opening in the presence of a catalyst, thus obtaining high molar mass poly (lactic acid);
f) devolatilization of the polymeric mass obtained in e); and
g) recovery of the final product poly (lactic acid) with high purity and molar mass between 50,000 and 200,000 g/mol with a reaction conversion between 70% and 95%.

Thus, the invention provides a process for producing poly (lactic acid) without the use of organic solvents or similar materials, so that the end product meets stream environmental requirements.

The invention further provides a reactor for the conversion of poly (lactic acid) into lactide.

The invention additionally provides a reactor for the polymerization of said lactide into poly (lactic acid).

### BRIEF DESCRIPTION OF THE DRAWINGS

Figure 1 attached herein shows a block diagram of the overall process for producing poly (lactic acid) from a lactic acid solution.
Figure 2 attached herein shows a detailed drawing of the depolymerization reactor.
Figure 3 attached herein shows a detailed drawing of the tubular polymerization reactor used for obtaining high molar mass polylactide. Figure 3A is a longitudinal section of said reactor. Figure 3B is a longitudinal section representing an arrangement of three polymerization reactors in series. Figure 3C is a cross sectional cut representing an arrangement of seven polymerization reactors in series.
Figure 4 attached herein presents a detailed drawing of the residual monomer devolatilizer used to separate the unreacted monomers present in the polymeric mass of the tubular reactor.
Figure 5 attached herein is a chart showing PLA molar mass values as a function of polymerization time.
Figure 6 attached herein is a chart showing the yield values of the PLA polymerization reaction as a function of polymerization time.

### DETAILED DESCRIPTION OF THE INVENTION

According to the present process, commercial or laboratory produced lactic acid in aqueous solution with lactic acid mass concentration between 50% and 95%, preferably about 85% (m/m), is fed to an oligomerization reactor (R1), wherein a polycondensation reaction occurs.

The reactor (R1) can be manufactured in various materials, preferably 316L stainless steel, without being limited thereto.

The reactor (R1) may be provided with one or more mixers, preferably in the form of blades, so as to maintain a more homogeneous dispersion of the mass inside the vessel.

The reactor (R1) is connected to a fractionating column (CR1) so that the obtained condensate can be recycled in the process or discarded. In addition, a condensation column (CS1) can be connected to the reactor (R1), so as to prevent the passage of volatile products from the interior thereof to a vacuum system.

The polycondensation reaction occurs by heating the lactic acid solution under controlled pressure for a certain period of time.

In this step, heating in the form of temperature ramps is used. The ramps are adjusted in accordance with the composition of the lactic acid solution which is feed. The temperature increasing rate used may be from 0.05°C to 20°C per minute, preferably from 5°C to 10°C, until reaching a constant temperature within the range of 140°C to 170°C, preferably 160°C. Upon reaching a constant temperature, the reaction medium is kept in this condition for a required period of time so that all the water from the lactic acid condensation reaction is removed. The required period of time may be from 30 minutes to 10 hours, preferably between 5 and 6 hours, depending on the extent of the desired reaction.

The reactor (R1) is kept under constant vacuum throughout the process. Pressures which are required in this step are between 600 mmHg and 20 mmHg, preferably between 40 and 50 mmHg.

After removing the water formed during the polycondensation reaction, low molar mass poly (lactic acid) is formed. This product is called herein an oligomer. The use of temperature ramps under controlled pressure enhances the process of forming the oligomer, thereby avoiding large losses of lactic acid which can be washed away in the vapor stream.

Unreacted water and lactic acid can be recycled again to the same polycondensation step. Accordingly, feeding losses are reduced, thus increasing the overall yield of the polycondensation process.

The obtained oligomer is then fed, via stream (L1), to a stirred storage tank (R10) having mechanical mixers, preferably in the form of rotating blades, where a depolymerization catalyst is added. The stream (L1) typically consists of oligomers with molar mass values between 300 and 5000 g/mol, preferably from 400 to 2500 g/mol, more preferably from 500 to 2000 g/mol, the viscosity thereof being more suitable for transfer operations.

This process configuration allows a good dispersion of the catalyst in the oligomeric medium, thereby increasing the depolymerization reaction efficacy.

Several classes of catalysts may be used such as metal oxides, metal alkoxides, metal carboxylates and tin coordinated compounds.

The mixture of catalyst and oligomer is performed in the oligomer fluidity temperature between 120 and 180°C, preferably between 140 and 170°C, depending on the molar mass of the produced oligomer. Typical catalysts used in this process may be based on tin, titanium and iron oxides. Tin, titanium and iron alkoxides, acetates or carboxylates can also be used, as well as any combination of these substances in amounts of 1 to 5000 ppm, preferably from 100 to 700 ppm, relative to the lactate which is present.

The mixture of oligomer and catalyst is continuously transferred under controlled flow rate via stream (L2) to the depolymerization reactor (200), called herein a molecular shredder. The connecting line between (R10) and said molecular shredder (200) may be provided with heaters, preferably electrical resistances, to ensure that the transferred mass reaches optimal process temperature prior to feeding the shredder (200).

The internal portion of the molecular shredder (200) includes a rotary circular surface shaped as an inclined and heated plate upon which the reaction mixture is poured under a controlled flow rate. The reaction mixture, under appropriate temperature and viscosity conditions, spreads through the rotary plate forming a fluid film with a high contact surface. The rotary frequency of the surface can be adjusted so as to control the thickness of the fluid film.

Said inclined plate transfers heat to the reaction mixture so as to promote the depolymerization reaction with the formation of a lactide-rich, low water content vapor stream, lactic acid and low molar mass oligomer.

The molecular shredder (200) walls can be heated at the process temperature between 190°C and 240°C, so that the still unreacted oligomer can react while runs down in the reactor walls. Typical plate rotary frequencies are between 30 rpm and 300 rpm, preferably between 30 rpm and 70 rpm, depending on the feeding composition.

The molecular shredder (200) is exclusively designed to provide a large contact surface of the reaction medium with the vapor phase, so as to facilitate the thermal exchange and the outlet of the generated vapors. Thus, the reaction occurs at short residence times, preventing the occurrence of racemization reactions and obtaining high optical purity lactide.

The generated vapor stream (L3) passes through a condenser (C2) and is continuously removed from the reactor by vacuum lower than 100 mmHg, preferably from 10 to 50 mmHg, so as to shift the reaction equilibrium to the products, thereby increasing the reaction conversion rate, that is, the lactide production. The unreacted mixture in (200) can be recycled to the storage tank (R10) through stream (RL1). This process configuration allows for the reduction of feeding losses and also promotes an increase in the overall process yield.

The vapor stream (L3) generated by the depolymerization step is then directed to a series of condensers and vessels which are stirred under vacuum and have defined temperatures, which act as isothermal flashes, whose purpose is to promote the separation of the stream into at least three fractions, called herein heavy, intermediate and light.

The heavy fraction is predominantly comprised of oligomers whose structure contains at least two incorporated lactic acid units (linear dimer) constituting from 2 to 10% (m/m) of the original stream.

The intermediate fraction is lactide-rich, being preferably constituted by 75 to 90% (m/m) of the original stream.

The light fraction is mainly comprised of water and lactic acid constituting from 2 to 15% (m/m) of the original stream.

The temperatures of the condenser and vessels are adjusted in accordance with the applied vacuum. Vacuums between 10 and 100 mmHg may be used in this step. Thus, the temperature of the first condenser-vessel set (R1, C2) can be adjusted between 160°C and 240°C. Thus, the components of the heavy fraction are condensed and the remaining fractions are still in vapor form. A fractioning column (CF3) at the top of the vessel (R11) prevents remaining vapors of the heavy fraction from being directed to the next condenser, thus increasing the separation efficacy.

The heavy fraction may be recycled from (R11) back to the shredder (200) through stream (RL2).

The intermediate and light fractions are directed via stream (L4) to the vessel-condenser set (R2, C3) whose temperature is adjusted in the range of 90°C to 160°C. Thus, the lactide is condensed into the vessel (R2), while the light fraction remains in vapor form. A fractioning column (CF12) at the top of the vessel (R2) prevents lactide remaining vapors from being directed to the next condenser (C12).

The light fraction is directed to the condenser (C12) which may be at temperatures from 10°C to 50°C, preferably of 20°C, and changing into the liquid state. The light fraction may be recycled through stream (RL3) into the step of acid concentration at the beginning of the process (R1).

The lactide collected in the vessel (R2) may have purity values of about 70% to 90% (m/m), values which are unsuitable for a polymerization process which the purpose of obtaining high molar mass polymers. Therefore, (R2) content is transferred via stream (L5) to a stirred vessel (R3), where it is mixed with ethanol so as to undergo a purification process via recrystallization. Ethanol can be used in hydrated form at concentrations of 50% to 96%. The recrystallization process proposed in the present invention may be considered environmentally friendly since it employs ethanol. This solvent is considered less aggressive and is derived from natural renewable sources such as, for example, sugar cane, corn, beet and others.

The system in (R3) is kept under constant temperature ranging from 60°C to 100°C in order to promote the solubilization of proportionally possible greater amount of lactide. After solubilization, the solution still inside (R3) is cooled to 10°C and allowed to recrystallize for a period which can range from 30 minutes to 12 hours.

Then, the fluid is drained from the vessel (R3) by a pipeline provided with a filter, so that only the liquid will pass while retaining the solid recrystallized lactide. The used filtering element can be in the form of sieves or stainless steel meshes with pores in the range of 1 micrometer to 1 millimeter, preferably between 1 and 10 micrometers. The permeated liquid is a mixture of ethanol (predominantly), lactic acid, lactide and water.

Such mixture can be transferred to an ethanol recovery step and the recrystallized lactide is dried under a vacuum lower than 100 mmHg in combination with slow mass heating in order to prevent alcoholysis reactions. Heating ramps can also be used in this step, typically between 0.05°C/min and 5°C/min, depending on the purity degree required for the subsequent step.

The lactide obtained by this process has a free acid content below 10 meq/kg, preferably equal or less than 1 meq/kg, and is thus suitable for the polymerization process for obtaining poly (lactic acid) with high molar mass values.

The purified lactide is then transferred via stream (L6) to the prepolymerization step (R4), wherein a polymerization catalyst is added. Several classes of catalysts such as tin and titanium compounds may be used, preferably tin octanoate. The catalyst content in the reaction medium is one of the factors that control the final polylactide molar mass. In general, the catalyst amount useful for the purposes of the present invention is between 5 and 500 ppm, preferably between 20 and 60 ppm.

In the prepolymerization step, the reaction medium is then heated at temperatures between 90°C and 200°C. The prepolymerization period of time can range from 10 to 60 minutes for obtaining a low molar mass polylactide.

The low molar mass polylactide is subsequently fed via stream (L7) into a tubular reactor (static mixer) (300) through a gear pump (B1).

The internal portion of said tubular reactor (300) contains a series of static mixers which promote the homogenization of the reaction mass flow. Thus, the heat exchange between the walls and the reaction mass is improved and a polylactide with suitable polydispersion values is obtained.

The gear pump (B1) provides better control of the feeding rate, thus improving the residence time control, which allows for obtaining polylactides with better defined grades. Another advantage of using a gear pump (B1) is to be able to work with reaction masses of higher viscosity.

The polymerization occurs in the reactor (300) at temperatures in the range of 160°C to 220°C, and reaction times ranging from 1 to 3 hours, depending on the temperature and flow rate.

The above-described process is able to produce polylactides having molar masses from 50,000 to 200,000 g/mol, with a reaction conversion between 70% and 95%.

The polylactide is transferred via stream (L8) to a devolatilizer (400), where the residual monomer is removed.

The devolatilizer consists of a vacuum chamber with a component heated to a constant temperature between 180 °C and 200°C. The internal portion of the devolatilizer has the shape of a pear. The polylactide mass is poured into the pear, so as to spread evenly over the surface, forming a film with large surface area. Thus, the residual lactide vapors are released and directed by vacuum action, typically between 50 and 500 mmHg, into a condenser (C11) heated to a constant temperature in the range between 80°C and 120°C. The obtained lactide is a high purity one and can be directly transferred to the prepolymerization step. Thus, the overall process yield is increased.

The devolatilized polylactide runs down the pear walls into the bottom of the chamber, where there is a horizontal extruder (500). The extruder (500) conforms and then transfers the fluid polylactide to a granulator (not shown). Any processing additives such as flow enhancers, pigments, dyes and the like which are usual in polymer processing are added through an opening in the devolatilizer (not shown) so that they are distributed in the polymeric mass during extrusion. Thus, additional processing steps are avoided which cause polylactide degradation.

The present invention will be described below with reference to the accompanying drawings. However, it should be clear to those skilled in the art that various modifications and variations can be made therein, without departing from the spirit of the invention.

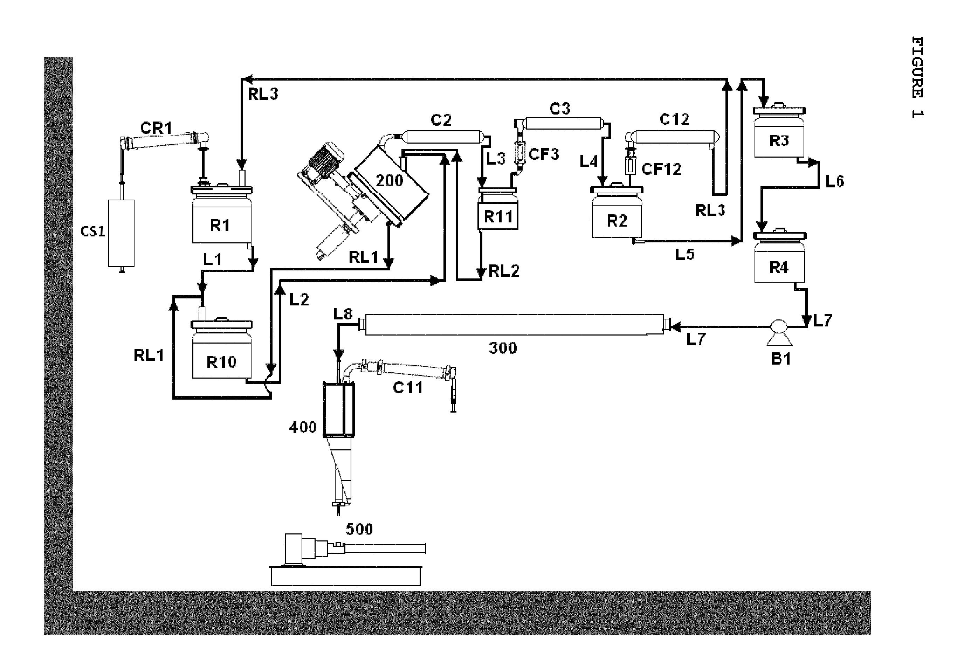

Figure 1 shows a flowchart of the overall process for the production of poly (lactic acid) from a lactic acid solution. The entire flow chart is generally designated by numeral (100).

The process begins by polycondensation reaction of the lactic acid in the reactor (R1) which is fed with a lactic acid solution according to the above-mentioned conditions in the present specification. The fractionating column (CR1) is represented as the best way to carry out the process, since it is connected to the reactor (R1) in order to cause reflux of lactic acid vapors. A condensation column (not shown) can be added between the reactor (R1) outlet and condenser (CS1) in order to increase the vapor pathway and improve the separation between lactic acid and other volatiles. Moreover, the condenser (CS1) can be connected to the column (CR1) in order to prevent the passage of volatile products to the vacuum system.

The oligomer produced in the polycondensation reaction is then transferred, either by gravity, pump driven or pressure difference, to the storage tank (R10). In (R10), the depolymerization catalyst is added to the previously obtained oligomer. The oligomer plus catalyst mixture is then fed to the molecular shredder (200), where the depolymerization reaction and subsequent lactide formation occurs.

In the molecular shredder (200), three streams are generated which are then separated into sets of condensers and vessels (C2), (R11), (C3), (R2) and (C12). The heavy fraction may be recycled into the shredder (200) through line (RL2), while the intermediate (lactide-rich) and light fractions are directed into the vessel (R2) through stream (L4).

The lactide-rich fraction is transferred from (R2) to (R3) via stream (L5), while the light fraction may be recycled to the reactor (R1) by the stream (RL3). In (R3), the lactide-rich fraction is mixed with ethanol to the recrystallization process. After recrystallizing the lactide and removing the liquid phase which is sent to a recovery unit, the solid is melted and transferred to the prepolymerization reactor (R4), where the polymerization catalyst is added and the mixture is fed into the tubular reactor (300).

The reaction product is then fed into the devolatilizer (400), which will separate the unreacted monomers of the obtained high molar mass poly (lactic acid). The obtained polymer is removed from (400) and fed into an extruder (500) and then to a granulator (not shown). A single screw extruder (500) relates to a commercially available apparatus for transporting polymeric resins, without being limited thereto.

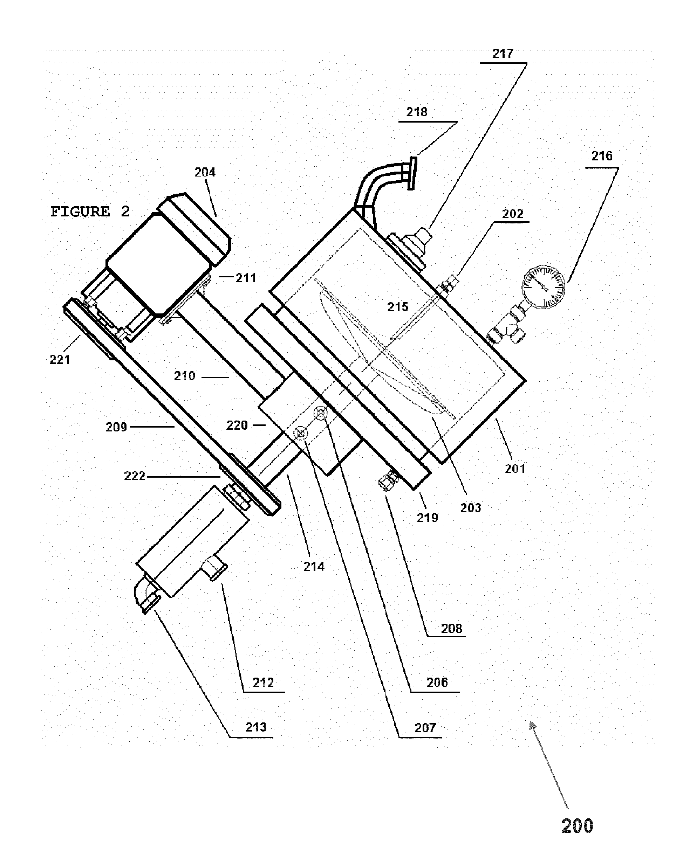

Figure 2 shows the detailed design of the depolymerization reactor (200), as described above in the present specification. The reactor (200) is made of stainless steel, without being limited thereto, and it has a body (201) having a feeding inlet (202) placed at an angle of 90° relative to the plane of a rotary plate where the lactide plus catalyst mixture is fed.

The internal portion of the reactor (200) body (201) is therefore provided with a rotary plate (203). The process controlled flow rate causes the dripping of the mixture on said rotary plate in circular motion having a defined frequency. The rotary plate (203) is positioned towards the inlet (202) so as to be perpendicular to a feeding tube (215), and is connected towards the reactor base (200) by a shaft (214).

The reactor (200) body (201) is supported on a base (219) pierced by the shaft (214) and provided with an outlet (208) for unreacted oligomers.

The depolymerization reactor (200) body (201) is connected to an electric engine (204) through a pair of pulleys (221) and (222) and a belt (209) so as to provide and control the suitable rotation for the process. The engine (204) is attached to the reactor body (201) through a shaft (210) which, in turn, is connected to a support (220) provided with a cooling water outlet (206) and a cooling water inlet (207). The support (220) is juxtaposed to the base (219). The engine (204) is supported on a base (211) which is also connected to the shaft (210). The shaft (214) vertically extends downwards from the rotary plate base (203), pierces the base (219), the support (220) and the pulley (222), and the bottom of said shaft (214) is provided with an oil inlet (213) and an oil outlet (212).

The combination of the rotary shaft (214) and plate (203) of the reactor (200) is heated by a heating oil circulating system introduced via inlet (213). The the reactor (200) walls are heated by electric resistances (not shown) so as to keep the whole reactor (200) system at the desired temperature for the process.

Upon reaching the moving plate (203), the viscous fluid radially spreads on the plate in order to form a fluid film on the surface of said plate. The formation of this film causes the fluid to have a large contact surface with the vapor phase. The vapor phase is withdrawn through outlet (218) vertically positioned on the top of the reactor (200) body (201).

The internal pressure of the system is monitored with the aid of a manometer (216) installed in the upper portion of the reactor (200) body (201).

A lamp (217) is also installed in the upper portion of the reactor (200) body (201) so as to facilitate the process control, as well as to facilitate the conduction of inspections inside the unit without opening the reactor (200).

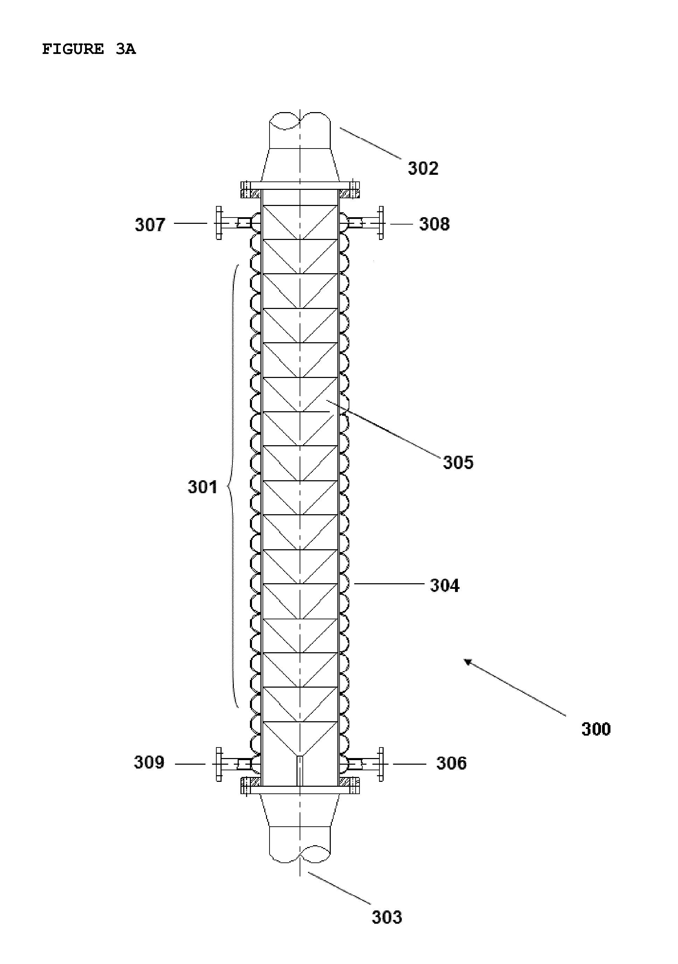

Figure 3A shows a sectional view of the tubular polymerization reactor (300) used for obtaining high molar mass poly (lactic acid).

The tubular reactor (300) is made of stainless steel, without being limited thereto, with a L/D (length/diameter) ratio between 2 and 10, preferably between 3 and 4. The tubular reactor can also be called herein low-flow static mixer for polymerization.

Applicants note that the technology of static mixers is well established on the market and various geometries can be employed according to its purpose. However, the use of this type of element in polymerization processes, particularly in the lactide polymerization, is not reported in earlier studies and can be considered an improvement of already existing processes, since it ensures high homogeneity to the reaction medium and consequently leads to a polymeric molar mass distribution narrower than conventional methods and with lower energy costs.

The tubular reactor (300) consists of an elongated body (301) provided with an inlet (302) at the top and a product outlet (303) at the bottom. Externally, the body (301) is provided with corrugations (304) to increase the heat transfer rate from the internal portion of the reactor to the external environment. Internally, the reactor (300) is provided with mixing elements (305). In the upper portion of one side of the reactor there is an inlet (308) for cooling water and at the bottom, on the opposite side, there is an outlet (309) for cooling water. On top of the other side of the reactor there is an outlet (307) for thermal oil and at the bottom, on the opposite side, there is an inlet (306) for thermal oil.

The static mixer (300) used in the present invention is based on the sequence of mixture elements (305) in the form of distorted rectangles. The elements (305) which are successively arranged along the reactor (300) are responsible for radially dividing the flux into two when it reaches the next element positioned at 90° from the previous element, thus dividing the flow into two portions again. In principle, there are 16 elements (305) in the reactor (300), not being limited thereto. The dividing and mixing process is repeated until the flow returns to the original configuration in the number eight element and then restarts the process over the eight remaining elements.

The reaction temperature is controlled by means of thermal oil flow (306, 307) and cooling water (308, 309) which circulate throughout the reactor's (300) external cavity so as to keep the temperature within appropriate limits.

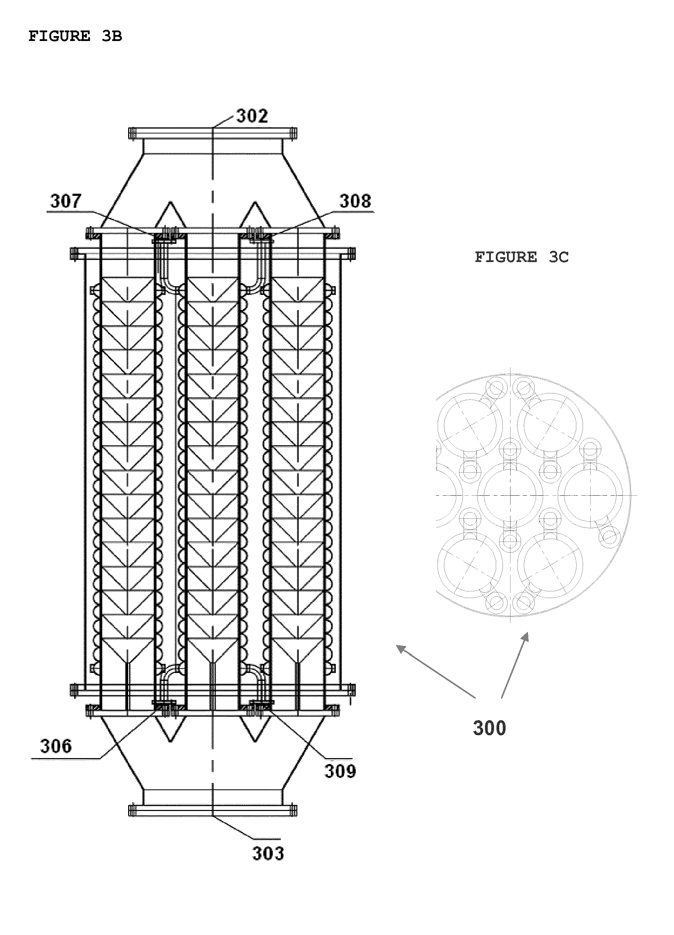

Multiple tubular reactors as described above can be arranged in parallel fashion, as shown in Figure 3B, so as to ensure higher yields. Figure 3C shows a configuration of seven reactors connected in parallel fashion for productions greater than 100 Kg/h.

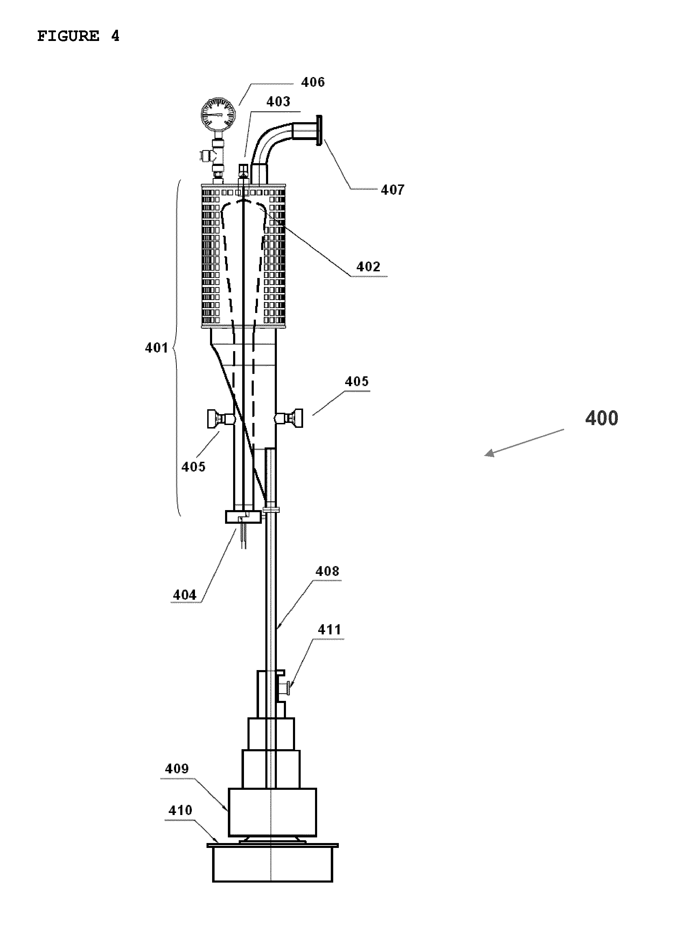

Figure 4 shows a section of the residual monomer devolatilizer (400) used to separate the unreacted monomers of the tubular reactor (300) present in the polymeric mass. The devolatilizer (400) is made of 316 L stainless steel, without being limited thereto.

The devolatilizer (400) comprises an elongated body (401), internally filled with a pear shaped metallic structure (402). Part of the structure (402) is contained within the devolatilizer (400) body (401) and vertically extends downwards in a cylindrical shape to house the electric heating system (404). The top of the devolatilizer (400) further houses an inlet (403) for introducing the material to be devolatilized inside the same, a manometer (406) for measuring the pressure and an outlet (407) for the vapor stream.

The feeding stream mostly comprised of poly (lactic acid) and residual unreacted monomers is fed through the vertical feeding opening (403) on the heated pear shaped structure (402). The process temperature is monitored by two thermometers (405) radially positioned at the bottom of the devolatilizer (400) so as to obtain a better reading of the polymeric mass temperature. When contacting the pear structure (402), the stream will spread on its surface and will form a high contact area fluid film between liquid and vapor phases. The vapor stream is withdrawn through the opening (407) located on top of the devolatilizer (400).

The polymeric film flows by gravity to the bottom of the devolatilizer (400), where it enters into a pipeline provided with a transport screw (408) driven by an electric engine (409) duly supported on a suitable support (410). The transport screw (408) is commercially available and is considered by the inventors as appropriate for transporting semi-molten polymeric masses. The poly (lactic acid) is then conveyed by (408) and withdrawn in (411) with high of molar mass values and high purity. The polymer is conveyed through an extruder (500) into a matrix which will give the shape of a "noodle", which is then granulated.

The present invention will be illustrated by the following Examples, which should not be considered limitative thereof.

### EXAMPLE 1

This Example illustrates the oligomerization process.

The oligomerization is carried out in a typical apparatus as described above, in the reactor (R1) under vacuum and with mechanical stirring. The system is fed with 3 L of lactic acid aqueous solution at 85%. 10 mmHg vacuum is applied and the temperature is gradually increased in a rate of about 10°C/min until stabilization at about 160°C, temperature at which the system is maintained for a total of 4 hours. The solution and reaction water is distilled so as to be collected in a collection bottle, while the oligomer remains in the lactic acid feed reactor. Thus, an oligomer is obtained as a viscous liquid with a molar mass of about 800 g/mol (determined by Gel Permeation Chromatography - GPC).

### EXAMPLE 2

This Example illustrates the depolymerization.

The depolymerization process is conducted in the apparatus as described in the attached Figures for oligomer fragmentation, such as the reactor (200). This system was equipped with heated short column and condenser to prevent lactide sublimation in the pipeline. The system is charged with 625 g of oligomer and 500 ppm of SnO (tin oxide) catalyst. 10 mmHg vacuum is applied and the system is heated to 220 °C, while keeping these conditions throughout the process. The crude lactide obtained in the collection bottle is presented as a slightly yellowish crystalline solid.

### EXAMPLE 3

This Example illustrates the lactide purification.

93% ethanol is added to 271.27 g of crude lactide, the solvent mass introduced into the system being equal to the lactide mass produced in the depolymerization reaction. The mixture is heated to about 65°C until complete solubilization of the crystalline solid and the assembly is introduced into a freezer (-24°C), remaining overnight. The highly crystalline solid formed is then filtered and finally subjected to a 1 mmHg vacuum for 24 hours to ensure complete solvent removal. Successive recrystallizations are carried out and the free acid contents are monitored by potentiometric titration as shown in Table 1.

**TABLE 1**

| Sample | Free acid (meq/Kg) |
|---|---|
| Crude lactide | 1862 |
| 1^{st} Recrystallization | 83 |
| 2^{nd} Recrystallization | 5 |
| 3^{rd} Recrystallization | 3 |

The crude lactide has a free acid content of 1862 meq/kg, which falls to 83 meq/Kg in the 1^{st} recrystallization and to 5 meq/kg in the 2^{nd} recrystallization, value which already allows the polymerization for obtaining high molar mass polymer. This means that a 3^{rd} recrystallization is not necessary.

### EXAMPLE 4

This Example illustrates the polymerization.

The lactide polymerization is performed in suitable reactors with mechanical stirring, temperature control and under dry nitrogen gas atmosphere. 148.72 g of high purity (> 98%) lactide and 281 ppm of tin octanoate catalyst are fed. The system is heated to 110°C for 10 minutes to complete melting and homogenization of the mixture. Then, the system is heated to 180°C and maintained for 3 hours. Samples are analyzed for determining conversion and molar mass. The conversion is determined by infrared spectroscopy (FTIR) and the molar mass is determined by gel permeation chromatography (GPC). The reaction conversion is of 93% and the obtained polylactide has a molar mass of 182,000 g/mol.

### EXAMPLE 5

This Example illustrates the effect of polymerization time on the polymer molar mass.

About 5 g of high purity (> 98%) lactide are added in Schlenk type flasks. The reactions are conducted at a temperature of 180°C, dry N₂ (g) atmosphere, 562 ppm of tin octanoate catalyst and under magnetic stirring. The flasks are removed and cooled at various time ranges. The obtained polylactide samples have their yields determined and analyzed by GPC.

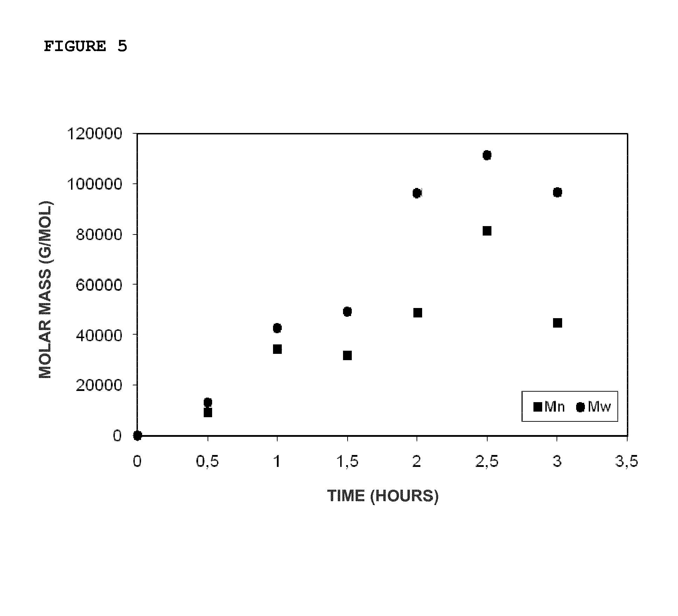

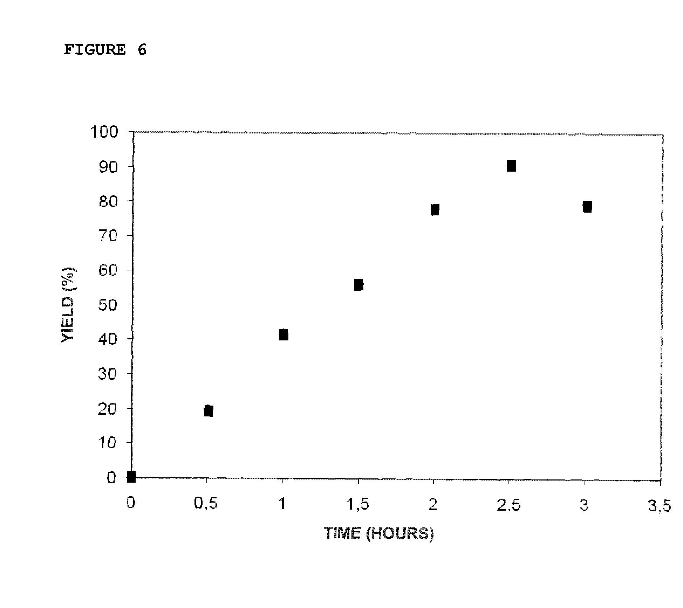

The yield and molar mass results for PLA in various polymerization times are shown in Table 2 and graphically in Figures 5 and 6.

**TABLE 2**

| | | | Molar mass (g/mol) | | |
|---|---|---|---|---|---|
| Inlet | Reaction time (h) | Yield (%) | Mn | Mw | Mw/Mn |
| 1 | 0.5 | 20 | 11,300 | 13,300 | 1.17 |
| 2 | 1 | 42 | 34,300 | 42,400 | 1.23 |
| 3 | 1.5 | 56 | 32,000 | 49,200 | 1.54 |
| 4 | 2 | 78 | 48,900 | 96,800 | 1.98 |
| 5 | 2.5 | 91 | 81,600 | 111,400 | 1.37 |
| 6 | 3 | 80 | 44,700 | 96,600 | 2.16 |

## Claims

1. Process for producing poly (lactic acid) from lactic acid **characterized by** comprising the steps of:
a) in an oligomerization reactor (R1), performing the polycondensation of a lactic acid solution by heat in the form of temperature ramps with a heating rate of 0.05°C to 20°C per minute until reaching a constant temperature in the range of 140°C - 170°C, keeping the reaction medium at this level for 30 minutes to 10 hours and with a controlled pressure in the range of 600 mmHg to 20 mmHg, obtaining low molar mass poly (lactic acid), oligomer, in the range of 300 to 5,000 g/mol;
b) directing, via stream (L1), the low molar mass poly (lactic acid) obtained in step a) to an stirred storage tank (R10) and adding 1 to 5000 ppm of a depolymerization catalyst at a temperature between 120°C and 180°C, obtaining a heated mixture;
c) transferring the mixture obtained in step b), via stream (L2), to a depolymerization reactor (200) and effecting the depolymerization of the mixture obtained in step b) at a temperature between 190°C and 240°C in the presence of a depolymerization catalyst and at reduced pressure between 10 and 50 mmHg, obtaining a vapor stream (L3), which is directed to a first set of condenser and vessel (C2, R11) under reduced pressure between 10 and 100 mmHg and temperature between 160°C and 240°C, in order to condense the components of a heavy fraction of the vapor stream (L3);
d) directing, via stream (L4), the light and intermediate fractions of the vapor stream (L3) to a second set of condenser and vessel (C3, R2) at a temperature between 90°C and 160°C, obtaining a lactide with purity between 70% and 90% (m/m), which is condensed into the vessel (R2), while the light fraction remains in the vapor phase;
e) directing the light fraction to the condenser (C12) at temperatures between 10°C and 50°C, obtaining a liquid light fraction that can be recycled through stream (RL3) to the reactor (RI);
f) directing, via stream (L5), the lactide-rich stream from step d) to a stirred vessel (R3) for recrystallization of lactide in ethanol at a temperature between 60°C and 100°C, cooling the solution after solubilization to 10°C and allowing recrystallization for a period of 30 minutes to 12 hours;
g) directing, via stream (L6), the recrystallized lactide obtained in step f) into a vessel (R4) for prepolymerization of the recrystallized lactide via ring opening in the presence of a catalyst at a temperature between 90°C and 200°C for 10 to 60 minutes, for obtaining a low molar mass polylactide;
h) pumping, via stream (L7), the polylactide obtained in step g) to a tubular reactor (300) for polymerization at a temperature between 160°C and 220°C for 1 to 3 hours, obtaining a polylactide with a molar mass between 50,000 and 200,000 g/mol and a reaction conversion between 70% and 95%;
i) transferring, via stream (L8), the polylactide obtained in step h) to a devolatilizer (400) having a pear shaped structure (402), wherein at a temperature between 180°C and 200°C and under reduced pressure, residual lactide vapors are removed and sent to a condenser (C11), while devolatilized polylactide runs down the wall of the pear shaped structure (402) towards a horizontal extruder (500); and
j) conforming the polylactide obtained in step i) in said extruder (500) and transferring the fluid polylactide into the final product granulation.

2. Process, according to claim 1, **characterized in that** in step a) the temperature ramp preferably involves a heating rate of 5°C to 10°C per minute until reaching a final temperature of preferably 160°C, keeping the reaction medium in this final temperature condition preferably for 5 to 6 hours and at a pressure preferably between 40 and 50 mmHg.

3. Process, according to claim 1, **characterized in that** the top of the reactor (R1) is equipped with a fractionating column (CR1).

4. Process, according to claim 1, **characterized by** recycling water and lactic acid of step a) to the polycondensation.

5. Process, according to claim 1, **characterized in that** the molar mass of the oligomer generated in step a) is preferably between 400 and 2500 g/mol, more preferably between 500 and 2000 g/mol.

6. Process, according to claim 1, **characterized in that** in step b) the depolymerization catalysts are selected from metal oxides, metal alkoxides, metal carboxylates and coordinated compounds of tin, titanium and iron, alkoxides, tin, titanium and iron carboxylates or acetates, or any combination of these substances in an preferred amount of 100 to 700 ppm relative to the present lactate.

7. Process, according to claim 1, **characterized in that** the stream (L2) is electrically heated.

8. Process, according to claim 1, **characterized in that** in step c) the unreacted mixture in the reactor (200) is recycled to the storage tank (R10) through stream (RL1).

9. Process, according to claim 1, **characterized in that** in step c) said heavy fraction is comprised predominantly of oligomers whose structure contains at least two incorporated lactic acid units, linear dimer, constituting 2 to 10% (m/m) of the original stream, while the light fraction is mainly comprised of water and lactic acid, constituting 2 to 15% (m/m) of the original stream.

10. Process, according to claim 1, **characterized in that** in step c) a fractionating column (CF3) on the top of said vessel (R11) prevents remaining vapors from heavy fraction to be directed to the next condenser.

11. Process, according to claim 1, **characterized in that** in step f) the recrystallized lactide is dried under vacuum of less than 100 mmHg in combination with slow heating of the mass or by heating ramps between 0.05°C/min and 5°C/min.

12. Process, according to claim 1, **characterized in that** in step i) any processing additives selected among flow enhancers, pigments, dyes and the like, are added through an opening in the devolatilizer (400) so as to be distributed in the polymeric mass during extrusion.

13. Depolymerization reactor for performing the lactide depolymerization of step c) of the process as defined in claim 1 **characterized by** comprising:
a) a body (201) having a feed inlet (202) for feeding a mixture of oligomer plus catalyst;
b) within said body (201), a rotary plate (203) which rotates in a circular motion with a defined frequency, said plate (203) being connected towards the inlet (202) by a feed tube (215) and towards the reactor base (200) by an axis (214);
c) a system for circulating heating oil (212, 213) in the body (201) of said reactor to heat the assembly formed by the rotating shaft (214) and the plate (203), and a system for circulating cooling water (206, 207) for cooling said assembly so as to keep the desired temperature for the process; and
d) an electric engine (204) connected to the shaft (214) through a pair of pulleys (221, 222) and a belt (209) for providing and controlling the plate (203) rotation which is suitable to the process.

14. Depolymerization reactor, according to claim 13, **characterized in that** the reactor (200) body (201) is supported on a base (219) pierced by the shaft (214) and provided with an outlet (208) for unreacted oligomers.

15. Depolymerization reactor, according to claim 13, **characterized in that** the electric engine (204) is attached to the reactor body (201) through a shaft (210) connected to a support (220) having a cooling water outlet (206) and a cooling water inlet (207).

16. Depolymerization reactor, according to claim 13, **characterized in that** the shaft (214) vertically extends downwards from the rotary plate base (203), pierces the base (219), the support (220) and the pulley (222), and the bottom of said shaft (214) is provided with an oil inlet (213) and an oil outlet (212).

17. Depolymerization reactor, according to claim 13, **characterized in that** the internal pressure of the system is monitored with the aid of a manometer (216) installed in the top of the reactor (200) body (201).

18. Depolymerization reactor, according to claim 13, **characterized in that** the top of the reactor (200) body (201) is provided with a lamp (217).

19. Tubular reactor to perform the lactide polymerization of step h) of the process as defined in claim 1 **characterized by** comprising:
a) an elongated body (301) with a L/D ratio between 2 and 10 provided with a lactide inlet (302) at the top and a poly (lactic acid) outlet (303) at the bottom, a cooling water inlet (308) and a cooling water outlet (309), a thermal oil inlet (306) and a thermal oil outlet (307), and externally provided with corrugations (304); and
b) mixture elements (305) successively arranged along the reactor (300) for radially dividing the flow into two when it reaches another element positioned at 90° from the previous element, thus dividing the flow into two portions again.

20. Tubular reactor, according to claim 19, **characterized in that** the mixture elements (305) are in number of at least 16.

21. Tubular reactor, according to claim 19, **characterized in that** the L/D ratio is between 3 and 4.

22. Tubular reactor, according to claim 19, **characterized by** being used as a parallel arrangement of multiple tubular reactors (300).

23. Tubular reactor, according to claim 22, **characterized in that** the arrangement comprises three reactors (300).

24. Tubular reactor, according to claim 22, **characterized in that** the arrangement comprises seven reactors (300).

25. Devolatilizer to be used in step i) of the process as defined in claim 1, **characterized by** comprising an elongated body (401), internally filled with a pear shaped structure (402), part of said structure (402) being contained within the devolatilizer (400) body (401) and vertically extending downwards in a cylindrical shape to house an electric heating system (404).

26. Devolatilizer, according to claim 25, **characterized in that** the top of the same houses an inlet (403) for introducing the material to be devolatilized, a manometer (406) and an outlet (407) for vapor stream.

27. Devolatilizer, according to claim 25, **characterized in that** the process temperature is monitored by two thermometers (405) radially positioned at the bottom of said devolatilizer (400).

28. Devolatilizer, according to claim 25, **characterized by** removing the polymeric film resulting from devolatilization by means of a transport screw (408) driven by an electric engine (409) supported on a support (410) while the poly (lactic acid) is removed in (411).
